# DEMANDE DE BREVET EUROPEEN

(11) **EP 1 211 127 A1**
(43) Date de publication de la demande: **05.06.2002**
(21) Numéro de dépôt: 01402739.5
(22) Date de dépôt: 22.10.2001
(51) Int. Cl.: B60N 2/36, B60N 2/30

(54) **Agencement de sièges dans un habitacle de véhicule automobile**

(30) Priorité: 29.11.2000 FR 0015444
(71) Demandeur: Peugeot Citroen Automobiles SA, 92200 Neuilly sur Seine (FR)
(72) Inventeur: Levitre, Gilles, 92230 Gennevilliers (FR); Cazes, Christophe, 75009 Paris (FR)
(74) Mandataire: Lanceplaine, Jean-Claude

(57) **Abrégé**

L'invention concerne un agencement de sièges dans un habitacle de véhicule automobile, du type comprenant, sur un plancher (3) de ce véhicule, une rangée de sièges avant comportant deux sièges (10) formés chacun par une assise (11) et un dossier (12) et une rangée de sièges arrière comprenant au moins une assise (21) et au moins un dossier (22) articulé sur ladite assise. Cette assise 21 et ce dossier (22) de la rangée de sièges arrière sont déplaçables par retournement entre une position d'utilisation et une position escamotée dans laquelle au moins ladite assise (21) est placée horizontalement dans un logement (30) ménagé au-dessous de cette assise (21) pour former une partie du plancher (3).

## Description

La présente invention concerne un agencement de sièges dans un habitacle de véhicule automobile.

La plupart des véhicules automobiles sont maintenant équipés, derrière la rangée de sièges avant, d'une rangée de sièges arrière qui est modulable de façon à adapter l'habitabilité du véhicule en fonction du nombre de passagers et/ou des charges à transporter.

Pour cela, on connaît des sièges qui sont conçus pour pouvoir basculer l'assise derrière la rangée de sièges située devant et rabattre le dossier de façon à augmenter le volume de chargement.

Mais, les solutions utilisées jusqu'à présent ne permettent pas, par des manoeuvres simples et sans effort important, de replier les sièges et d'obtenir un plancher de chargement continu et plat.

On connaît également des sièges démontables qui peuvent être enlevés pour agrandir le volume de chargement.

Le principal inconvénient de cette solution réside dans la nécessité du démontage.

En effet, il faut libérer les différents sièges de leur ancrage sur le plancher du véhicule et ranger les sièges démontés, en dehors du véhicule, dans des locaux. Lorsque l'on a besoin d'une place de passager supplémentaire, il faut de nouveau rechercher le siège et procéder à son remontage. Ainsi, l'adaptation de l'espace interne du véhicule en fonction de son utilisation nécessite un temps de préparation et des efforts importants.

De plus, en milieu urbain, le possesseur d'un tel véhicule ne dispose pas toujours d'un local permettant le stockage des sièges enlevés.

L'invention a pour but d'éviter ces inconvénients en proposant un agencement de sièges dans un habitacle de véhicule automobile permettant, sans enlèvement de siège et en effectuant des manoeuvres simples, de moduler le nombre de places en fonction des passagers ainsi que le volume de chargement selon les charges à transporter.

L'invention a donc pour objet un agencement de sièges dans un habitacle de véhicule automobile, du type comportant, sur un plancher de ce véhicule, une rangée de sièges avant comprenant deux sièges formés chacun par une assise et un dossier et une rangée de sièges arrière comprenant au moins une assise et au moins un dossier articulé sur ladite assise, caractérisé en ce que ladite assise et ledit dossier de la rangée de sièges arrière sont déplaçables par retournement entre une position d'utilisation et une position escamotée dans laquelle au moins ladite assise est placée horizontalement dans un logement ménagé au-dessous de cette assise pour former une partie du plancher.

Selon d'autres caractéristiques de l'invention :
- ledit dossier de la rangée de sièges arrière comporte, d'une part, une portion inférieure solidaire de l'assise correspondante en formant avec ladite assise un L et, d'autre part, une portion supérieure articulée sur ladite portion inférieure,
- la portion supérieure dudit dossier de la rangée de sièges arrière est déplaçable, en position escamotée de ladite rangée de sièges arrière, entre une position sensiblement verticale derrière les dossiers de la rangée de sièges avant et une position sensiblement horizontale dans un logement ménagé au-dessous de cette rangée de sièges avant,
- ladite assise et ledit dossier de la rangée de sièges arrière forment une banquette déplaçable par retournement suivant une rotation de 180° entre la position d'utilisation et la position escamotée au moyen d'un mécanisme à bascule, ledit dossier comprenant une portion centrale relevable dans ladite position verticale et deux portions latérales disposées dans ladite position horizontale en position escamotée de la banquette,
- ladite assise et ledit dossier forment deux sièges indépendants placés l'un à côté de l'autre et déplaçables chacun par retournement suivant une rotation de 180° entre la position d'utilisation et la position escamotée au moyen d'un mécanisme à bascule,
- ledit dossier de la rangée de sièges arrière comporte, d'une part, une portion inférieure articulée sur l'assise correspondante et, d'autre part, une portion supérieure articulée sur ladite portion inférieure,
- dans la position escamotée de la rangée de sièges arrière, la portion inférieure du dossier est placée dans une position sensiblement horizontale dans le prolongement de l'assise correspondante pour former une partie du plancher et la portion supérieure dudit dossier est placée dans une position sensiblement verticale derrière les dossiers de la rangée de sièges avant, ladite assise et ledit dossier étant déplaçables par retournement selon une rotation de 180° au moyen d'un mécanisme à bascule,
- chaque mécanisme à bascule est formé par au moins une bielle dont une première extrémité est montée articulée au-dessous de l'assise correspondante et dont une seconde extrémité est montée articulée sur le fond du logement ménagé au-dessous de la rangée de sièges arrière.

D'autres caractéristiques et avantages de l'invention apparaîtront au cours de la description qui va suivre, donnée à titre d'exemple et faite en se référant aux dessins annexés, sur lesquels :
- la Fig. 1 est une vue schématique en élévation d'un habitacle de véhicule automobile dans lequel sont agencés des sièges,
- la Fig. 2 est une vue schématique de dessus montrant un premier mode de réalisation de l'agencement des sièges en position d'utilisation,
- les Figs. 3 et 4 sont deux vues schématiques en élévation montrant deux positions du basculement de la rangée de sièges arrière,
- la Fig. 5 est une vue schématique de dessus montrant un deuxième mode de réalisation d'un agencement des sièges en position d'utilisation,
- la Fig. 6 est une vue schématique en élévation montrant le basculement de la rangée de sièges arrière selon le deuxième mode de réalisation,
- la Fig. 7 est une vue schématique de dessus montrant un troisième mode de réalisation de l'agencement des sièges en position d'utilisation,
- les Figs. 8 et 9 sont des vues schématiques en élévation montrant un quatrième mode de réalisation de l'agencement des sièges respectivement en position d'utilisation et en position escamotée.

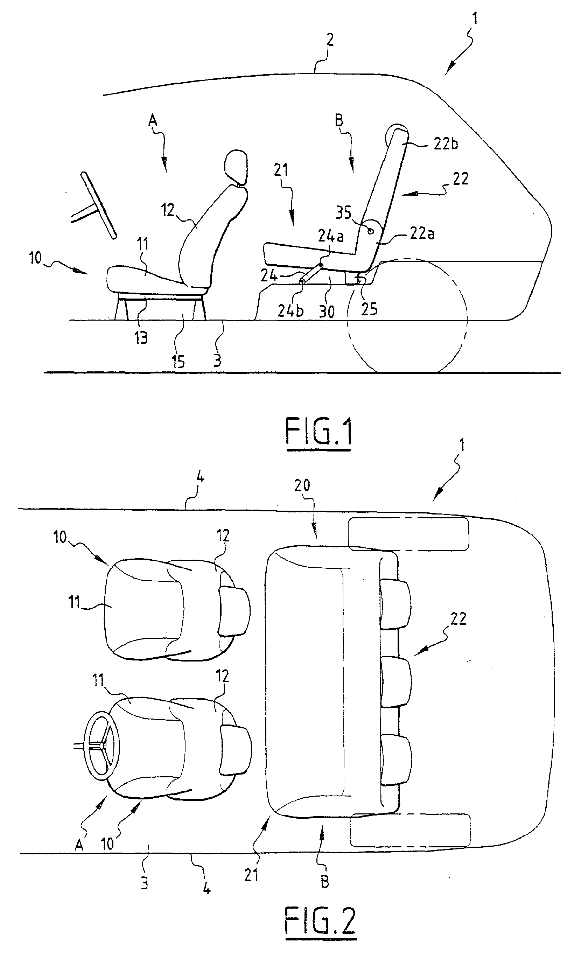

Sur les Figs. 1 et 2, on a représenté schématiquement un véhicule automobile comportant une carrosserie 1, dont on a montré une partie du pavillon 2 et une partie du plancher 3 reliés entre eux par des montants latéraux 4.

Le véhicule automobile comporte, dans le sens de la marche, deux rangées de sièges, une rangée de sièges avant A et une rangée de sièges arrière B.

Dans l'ensemble des exemples de réalisation représentés sur les figures, la rangée de sièges avant A se compose de deux sièges 10 comprenant chacun une assise 11 et un dossier 12. Chaque siège 10 est monté déplaçable longitudinalement sur des glissières 13 afin de pouvoir régler la position de chacun de ces sièges 10 en fonction de la morphologie du passager.

D'une manière générale, la rangée de sièges arrière B comprend au moins une assise 21 et au moins un dossier 22 qui sont déplaçables par retournement entre une position d'utilisation et une position escamotée dans laquelle au moins ladite assise 21 est placée horizontalement et forme une partie du plancher 3 du véhicule automobile.

Ainsi que représenté à la Fig. 1, le plancher 3 comporte, au-dessous de la rangée de sièges avant A, un premier logement 15 et au-dessous de la rangée de sièges arrière B, un second logement 30, la profondeur du premier logement 15 étant supérieure à la profondeur du second logement 30.

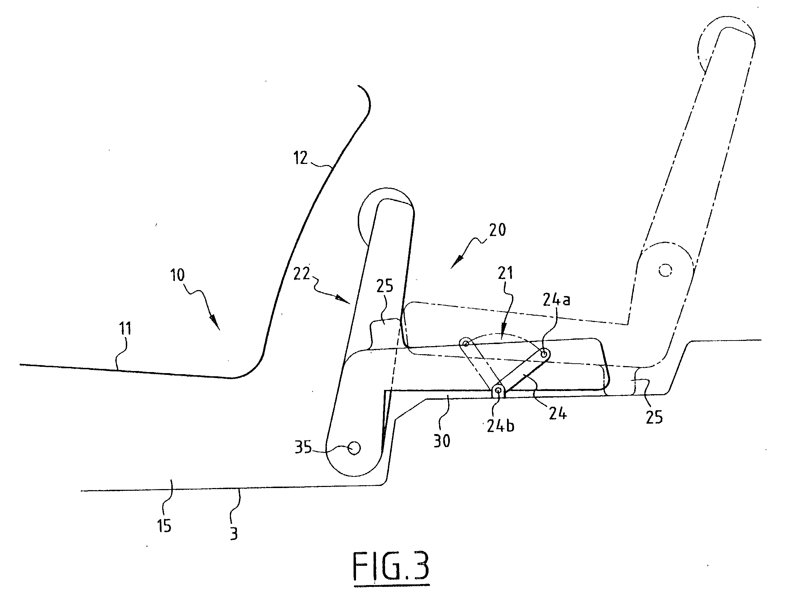

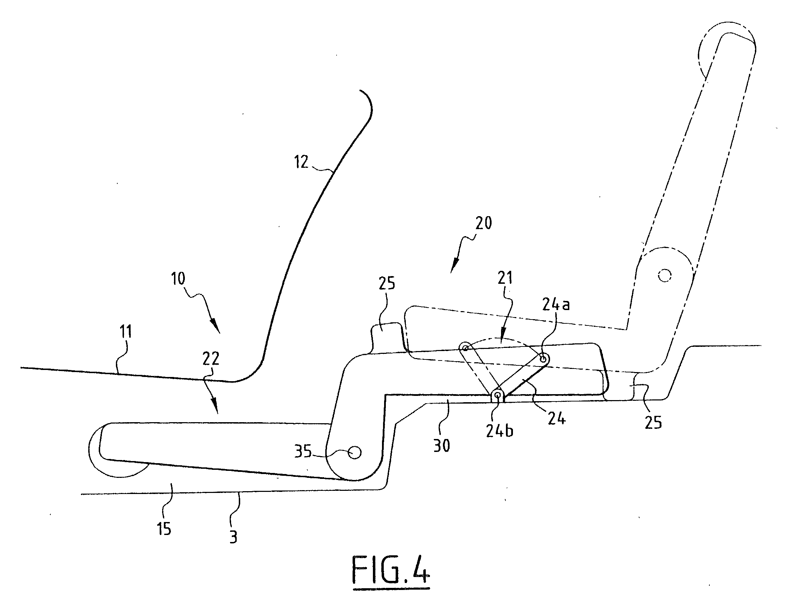

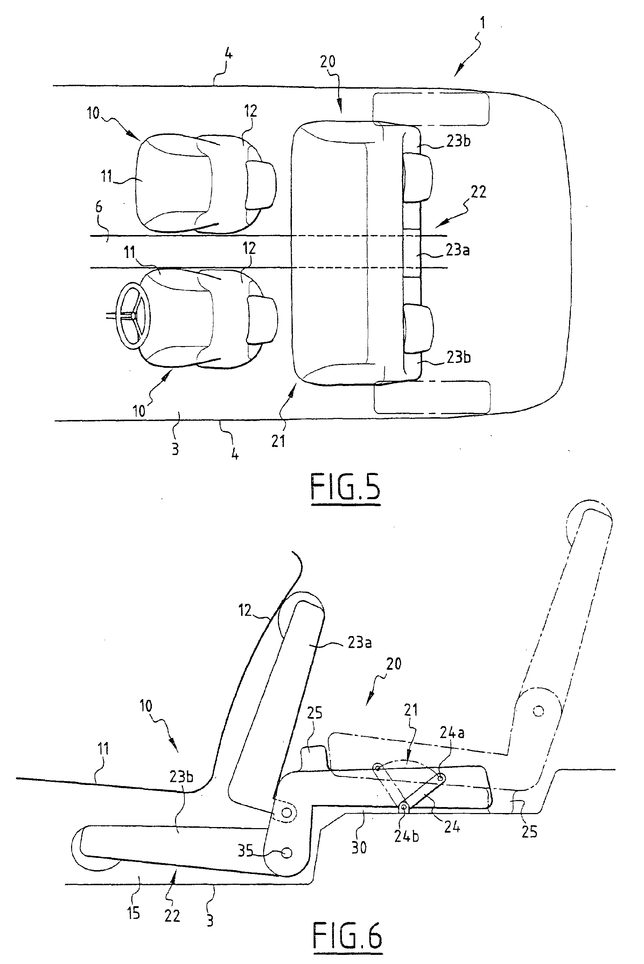

Selon un premier mode de réalisation représenté sur les Figs. 2 à 4, l'assise 21 et le dossier 22 de la rangée de sièges arrière B forment une banquette 20 déplaçable entre la position d'utilisation dans laquelle la banquette 20 est en appui sur le plancher 3 par au moins un pied 25, comme représentée en pointillés sur les Figs. 3 et 4, et une position escamotée dans laquelle l'assise 21 est placée dans le logement 30 ménagé dans le plancher 3 au-dessous de la rangée de sièges arrière B, comme représentée en trait plein sur les Figs. 4 et 5.

Dans ce mode de réalisation, le dossier 22 comporte, d'une part une portion inférieure 22a solidaire de l'assise 21 en formant avec cette assise 21 un L et, d'autre part, une portion supérieure 22b articulée sur ladite portion inférieure 22a au moyen d'un axe d'articulation 35 horizontal.

De cette manière, dans la position escamotée de la banquette 20 où l'assise 21 est placée sensiblement horizontalement dans le logement 30, la portion supérieure 22b du dossier 22 est déplaçable entre une positon sensiblement verticale derrière les dossiers 12 de la rangée de sièges avant (Fig. 3) et une position sensiblement horizontale dans le logement 15 ménagé en dessous de cette rangée de sièges avant (Fig. 4).

La position sensiblement horizontale de la partie supérieure 22b du dossier 22 dans le logement 15 permet d'augmenter la surface de chargement du plancher.

Pour permettre le déplacement de la banquette 20 entre sa position d'utilisation et sa position escamotée, cette banquette 20 comporte un mécanisme à bascule constitué par au moins une bielle 24 dont une première extrémité 24a est montée articulée au-dessous de l'assise 21 et dont une seconde extrémité est montée articulée sur le fond du logement 15.

De préférence, le mécanisme à bascule est constitué de deux bielles 24 s'étendant parallèlement l'une par rapport à l'autre et fixées par exemple-au niveau de chaque bord latéral de l'assise 21 de la banquette 20.

Dans le cas où le plancher 3 du véhicule automobile est pourvu d'un tunnel 6 s'étendant depuis le compartiment moteur jusqu'au train de roulement arrière par exemple pour le passage d'un arbre de transmission, le dossier 22 comporte une portion centrale 23a relevable dans une position sensiblement verticale derrière les dossiers 12 de la rangée de la sièges avant et deux portions latérales 23b disposées dans une position sensiblement horizontale dans le logement 15 ménagé au-dessous de la rangée de siège avant A lorsque la banquette 20 est en position escamotée, ainsi que représentée à la Fig. 6.

Dans ce cas également, la banquette 20 comporte un mécanisme à bascule formé par au moins une bielle 24 et de préférence deux bielles, dont une première extrémité 24a est montée articulée au-dessous de l'assise 21 et dont une seconde extrémité 24b est montée articulée sur le fond du logement 30.

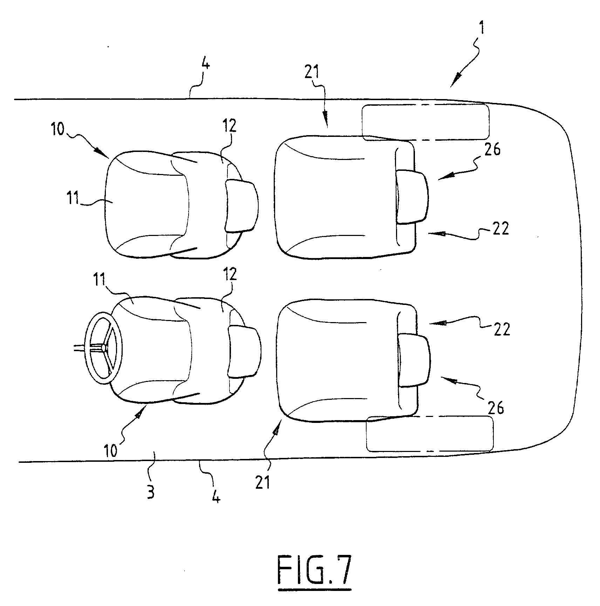

Selon un autre mode de réalisation représenté à la Fig. 7, l'assise 21 et le dossier 22 de la rangée de sièges arrière B forment deux sièges indépendants 26 déplaçables chacun entre la position d'utilisation dans laquelle chaque siège 26 est en appui sur au moins un pied 25 et la position escamotée dans laquelle l'assise 21 de chaque siège 26 est placée dans le logement 30 au-dessous de la rangée de sièges arrière B et dans laquelle chaque dossier 22 est placé sensiblement verticalement derrière un dossier 12 de la rangée de sièges avant A ou sensiblement horizontalement dans le logement 15 ménagé au-dessous de ladite rangée de sièges avant A.

Chaque siège 26 comporte un mécanisme à bascute formé par au moins une bielle 24 et de préférence par deux bielles 24 s'étendant parallèlement l'une par rapport à l'autre, dont une première extrémité 24 est montée articulée au-dessous de l'assise 21 correspondante et dont une seconde extrémité 24b est montée articulée sur le fond du logement 30.

Le basculement de la rangée de sièges arrière B est réalisé de la façon suivante.

Tout d'abord dans le cas où le plancher 3 comporte un tunnel 6 et dans le cas où la rangée de sièges arrière B est formée par une banquette 20, l'utilisateur relève la partie centrale 23a du dossier 22.

Ensuite, l'utilisateur soulève la banquette 20 ou un siège 26 de façon à le basculer par retournement au moyen des bielles 24 et à lui faire décrire une rotation de 180° afin de placer l'assise 21 dans le logement 30 au-dessous de la rangée de sièges B.

A ce stade l'utilisateur a deux possibilités .

La première consiste à basculer la partie supérieure 22b du dossier 22 afin que, dans la position escamotée de ladite rangée de sièges arrière B, cette portion supérieure 22b se trouve dans une position sensiblement verticale contre les dossiers 12 de la rangée de sièges avant A, ainsi que représentée à la Fig. 3.

De ce fait, le plancher 3 présente une surface de chargement plane et de grande surface.

La seconde possibilité pour l'utilisateur consiste à pouvoir placer la portion supérieure 22b du dossier 22 en position horizontale dans le logement 15 au-dessous de la rangée de sièges avant A, comme représentée sur les Figs. 4 et 6.

Dans ce cas, le plancher 3 présente une surface de chargement encore plus importante.

Dans ce cas, le plancher 3 présente une surface de chargement encore plus importante.

De plus, en position escamotée de la rangée de sièges arrière B, les matelassures de la ou des assises 21 ainsi que du ou des dossiers 22 sont protégées de toutes salissures.

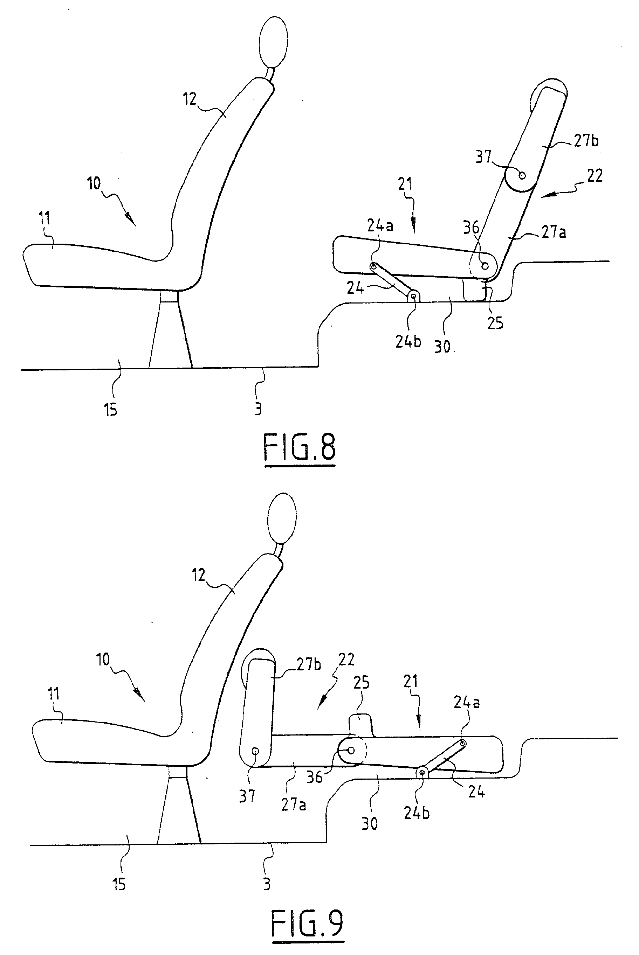

Selon un autre mode de réalisation représenté sur les Figs. 8 et 9, le dossier 22 de la rangée de sièges arrière B comporte d'une part, une portion inférieure 27a articulée sur l'assise 21 au moyen d'un axe d'articulation 36 horizontal et, d'autre part, une portion supérieure 27b articulée sur ladite portion inférieure au moyen d'un axe d'articulation 37 horizontal.

Dans ce cas aussi, la rangée de sièges arrière B peut être composée d'une banquette ou de deux sièges indépendants.

L'assise 21 et le dossier 22 sont déplaçables par retournement selon une rotation de 180° au moyen d'un mécanisme à bascule qui comporte au moins une bielle 24 et de préférence deux bielles 24, dont une première extrémité 24a est montée articulée au-dessous de l'assise 21 et dont une seconde extrémité 24b est montée articulée sur le fond du logement 30.

En position escamotée de la rangée de sièges arrière B, la portion inférieure 27a du dossier 22 est placée dans une position sensiblement horizontale dans le prolongement de l'assise 21 correspondante pour former une partie du plancher 3 et la portion supérieure 27b dudit dossier 22 est placée dans une position sensiblement verticale derrière les dossiers 12 de la rangée de sièges avant A.

En position escamotée de l'assise 21 et du dossier 22, les matelassures de cette assise et de ce dossier sont aussi protégées de toutes salissures.

L'agencement selon l'invention permet de disposer d'un véhicule dont le nombre de places est variable et d'un plancher de chargement plat et de grande surface, tout en protégeant la matelassure des sièges escamotés.

Cet agencement permet donc, en effectuant des manoeuvres simples, de pouvoir moduler le nombre de places en fonction des passagers, ainsi que le volume de chargement selon les charges à transporter.

## Revendications

1. Agencement de sièges dans un habitacle de véhicule automobile, du type comportant, sur un plancher (3) de ce véhicule, une rangée de sièges avant comprenant deux sièges (10) formés chacun par une assise (11) et un dossier (12) et une rangée de sièges arrière comprenant au moins une assise 21 et au moins un dossier 22 articulé sur ladite assise (21), **caractérisé en ce que** ladite assise (21) et ledit dossier (22) de la rangée de sièges arrière sont déplaçables par retournement entre une position d'utilisation et une position escamotée dans laquelle au moins l'assise (21) est placée horizontalement dans un logement (30) ménagé au-dessous de cette assise (21) pour former une partie du plancher (3).

2. Agencement selon la revendication 1, **caractérisé en ce que** ledit dossier (22) de la rangée de sièges arrière comporte, d'une part, une portion inférieure (22a) solidaire de l'assise (21) correspondante en formant avec ladite assise (21) un L et, d'autre part, une portion supérieure (22b) articulée sur ladite portion inférieure (22a).

3. Agencement selon la revendication 1 ou 2, **caractérisé en ce que** la portion supérieure (22b) dudit dossier (22) de la rangée de sièges arrière est déplaçable, en position escamotée de ladite rangée de sièges arrière, entre une position sensiblement verticale derrière les dossiers (12) de la rangée de sièges avant et une position sensiblement horizontale dans un logement (15) ménagé au-dessous de cette rangée de sièges avant.

4. Agencement selon l'une quelconque des revendications 1 à 3, **caractérisé en ce que** ladite assise (21) et ledit dossier (22) de la rangée de sièges arrière forment une banquette (20) déplaçable par retournement suivant une rotation de 180° entre la position d'utilisation et la position escamotée au moyen d'un mécanisme à bascule (24), ledit dossier (22) comprenant une portion centrale (23a) relevable dans ladite position verticale et deux portions latérales (23b) disposées dans ladite position horizontale en position escamotée de la banquette (20).

5. Agencement selon l'une quelconque des revendications 1 à 3, **caractérisé en ce que** ladite assise (21) et ledit dossier (22) forment deux sièges (26) indépendants placés l'un à côté de l'autre et déplaçables chacun par retournement suivant une rotation de 180° entre la position d'utilisation et la position escamotée au moyen d'un mécanisme à bascule (24).

6. Agencement selon la revendication 1, **caractérisé en ce que** ledit dossier (22) de la rangée de sièges arrière comporte, d'une part, une portion inférieure (27a) articulée sur l'assise (21) correspondante et, d'autre part, une portion supérieure (27b) articulée sur ladite portion inférieure (27a).

7. Agencement selon la revendication 6, **caractérisé en ce que** dans la position escamotée de la rangée de sièges arrière, la portion inférieure (27a) du dossier (22) est placée dans une position sensiblement horizontale dans le prolongement de l'assise (21) correspondante pour former une partie du plancher (3) et la portion supérieure (27b) dudit dossier (22) est placée dans une position sensiblement verticale contre les dossiers (12) de la rangée de sièges avant, ladite assise (21) et ledit dossier (22) étant déplaçables par retournement selon une rotation de 180° au moyen d'un mécanisme à bascule (24).

8. Agencement selon l'une quelconque des revendications précédentes, **caractérisé en ce que** chaque mécanisme à bascule est formé par au moins une bielle (24) dont une première extrémité (24a) est montée articulée au-dessous de l'assise (21) correspondante et dont une seconde extrémité est montée articulée sur le fond du logement (30) ménagé au-dessous de la rangée de sièges arrière.
